# EUROPEAN PATENT APPLICATION

(11) **EP 3 232 632 A1**
(43) Date of publication of application: **18.10.2017**
(21) Application number: 15864415.3
(22) Date of filing: 12.03.2015
(51) Int. Cl.: H04L 29/06, H04L 9/08

(54) **METHOD AND SYSTEM FOR ACQUIRING PLAINTEXT OF NETWORK SECRET DATA**

(30) Priority: 02.12.2014 CN 201410721300
(71) Applicant: Institute of Acoustics, Chinese Academy of Sciences, Haidian District Beijing 100190 (CN); Beijing Intellix Technologies Co. Ltd., Beijing 100190 (CN)
(72) Inventor: SONG, Lei, Beijing 100190 (CN); DONG, Haitao, Beijing 100190 (CN); YE, Xiaozhou, Beijing 100190 (CN); TIAN, Jing, Beijing 100190 (CN); ZHENG, Yanwei, Beijing 100190 (CN); FAN, Hao, Beijing 100190 (CN)
(74) Representative: Hanna Moore + Curley
(86) International application number: PCT/CN2015/074079
(87) International publication number: WO 2016/086546

(57) **Abstract**

The present invention relates to a method and system for acquiring plaintext of network secret data. The method comprises: on the basis that a TCP connection exists between a client and a server, a data acquisition system is introduced, two correlated SSL/TLS connections are established between the data acquisition system and the client and the server respectively by modifying an SSL/TLS handshake message, and the two connections share session keys. The data acquisition system having the keys can restore the plaintext of secret data. In the present invention, the two SSL/TLS connections established between the data acquisition system and the client and the server share the session keys, thereby shortening the response time, greatly improving the SSL throughput, and saving memory resources, and thus the maximum number of user connections is increased.

## Description

### TECHNICAL FIELD

The present application relates to the technical field of network information security, and in particular to a method and system for acquiring plaintext of network secret data at the Secure Socket Layer/Transport Layer Security (SSL/TLS) protocol.

### BACKGROUND OF THE INVENTION

The SSL/TLS protocol, which runs above the Transmission Control Protocol and below various application layer protocols, can prevent a message in communication between an application program at a client and an application program at a server from being eavesdropped on, tampered and faked, thereby providing a security service for data communication over the Internet. SSL/TLS is a layered protocol, which comprises an underlying Record Protocol and upper layer Change Cipher Spec Protocol, Alert Protocol and Handshake Protocol. At the record layer, high layer data is encapsulated into records which are finally sent through TCP after compression, calculation of Message Authentication Codes (MAC), and encryption; the data received through TCP is provided to a high layer after decryption, MAC verification and decompression. Records are the basic units for sending and receiving SSL/TLS protocol data. Among the three upper layer protocols, the Handshake Protocol functions to negotiate secret parameters between the client and the server, thereby establishing secure connections; the Change Cipher Spec Protocol is used for notifying the other party that messages to be sent subsequently are protected with newly negotiated secret parameters; and the Alert Protocol is responsible for notifying the other party of the occurrence of a failure and the degree of severity thereof.

During the transmission of network information, all application level data transmitted with the SSL/TLS protocol between the client and the server is encrypted , and there is no plaintext appear. Such encrypted data brings about difficulty to data auditing. For example, in an enterprise business system, there is a need to examine whether sensitive information such as client material and information, financial information, billing information and enterprise internal important material is leaked, whereas these information might be transmitted in the form of ciphertext. In the prior art, a SSL/TLS proxy server, which is introduced between the client and the server, establishes two independent SSL/TLS connections with the server and the client respectively, obtains and decrypts encrypted data to extract plaintext, and then encrypts data again and sends it to the peer. Since the two connections are independent of each other, problems arise as below: the SSL/TLS proxy server, after obtaining data, needs to modify data packet payload, which makes a long response time; since the SSL/TLS proxy server has to decrypt data into plaintext, encrypt the plaintext into ciphertext and finally send the ciphertext to the peer, the SSL throughput will be reduced significantly; the SSL/TLS proxy server needs to maintain two copies of key information for each user request, which will occupy more memory resources.

### SUMMARY OF THE INVENTION

An objective of the present application is to provide a method and system for acquiring plaintext of network secret data, wherein a data acquisition system is introduced which can restore the plaintext of the secret data, between a client and a server. Since the data acquisition system establishes two correlated SSL/TLS connections with the client and the server and the two connections share session keys, the data acquisition system can copy ciphertext and forward the same immediately without a need to decrypt and encrypt the ciphertext, and the data acquisition system only needs to main one copy of key information for each user request, thereby shortening a response time, improving greatly the SSL throughput, and occupying less memory resources.

To achieve the above objective, in a first aspect, the present application provides a method for acquiring plaintext of network secret data, the method comprises:
sending, by a server, a first server certificate message to a data acquisition system, the first server certificate message carrying a server certificate, the server certificate including a public key of the server;
verifying, by the data acquisition system, the server certificate;
extracting, by the data acquisition system, the public key of the server according to the server certificate and saving the public key of the server, upon a successful verification;
replacing, by the data acquisition system, the server certificate with the data acquisition system certificate, the data acquisition system certificate including a public key of the data acquisition system;
sending, by the data acquisition system, a second server certificate message to the client, the second server certificate message carrying the data acquisition system certificate;
verifying, by the client, the data acquisition system certificate;
encrypting, by the client, a preset master secret with the public key of the data acquisition system to obtain a first encrypted preset master secret;
sending, by the client, a first client key exchange message to the data acquisition system, the first client key exchange message carrying the first encrypted preset master secret;
decrypting, by the data acquisition system, the first encrypted preset master secret with a private key of the data acquisition system to obtain the preset master secret; and
generating, by the data acquisition system, a key according to the preset master secret, such that the data acquisition system decrypts secret data transmitted in a network according to the key.

In a second aspect, the present application provides a system for acquiring plaintext of network secret data, the system comprises:

the server, the data acquisition system and the client as provided by the embodiments of the present invention.

With the method and system for acquiring plaintext of network secret data provided by the present application, on the basis that a TCP connection exists between a client and a server, a data acquisition system is introduced, which establishes two correlated SSL/TLS connections with the client and the server, respectively, by modifying an SSL/TLS handshake message, and the two connections share session keys. The data acquisition system having these keys can restore the plaintext of secret data. Moreover the ciphertext after being copied can be forwarded immediately, shortening a response time and improving an SSL throughput. In addition, only a copy of key information needs to be maintained for each user request, saving memory resources and increasing the maximum number of user connections.

### BRIEF DESCRIPTION OF THE DRAWINGS

FIG. 1 is a flowchart of a method for acquiring plaintext of network secret data as provided by a first embodiment of the present application;
FIG. 2 is a schematic view of processing SSL/TLS data transmission as provided by the first embodiment of the present application; and
FIG. 3 is a schematic view of a system for acquiring plaintext of network secret data as provided by a second embodiment of the present application.

### DETAILED DESCRIPTION OF THE INVENTION

With reference to the accompanying drawings and the embodiments, further detailed description is presented below to technical solutions of the present application.

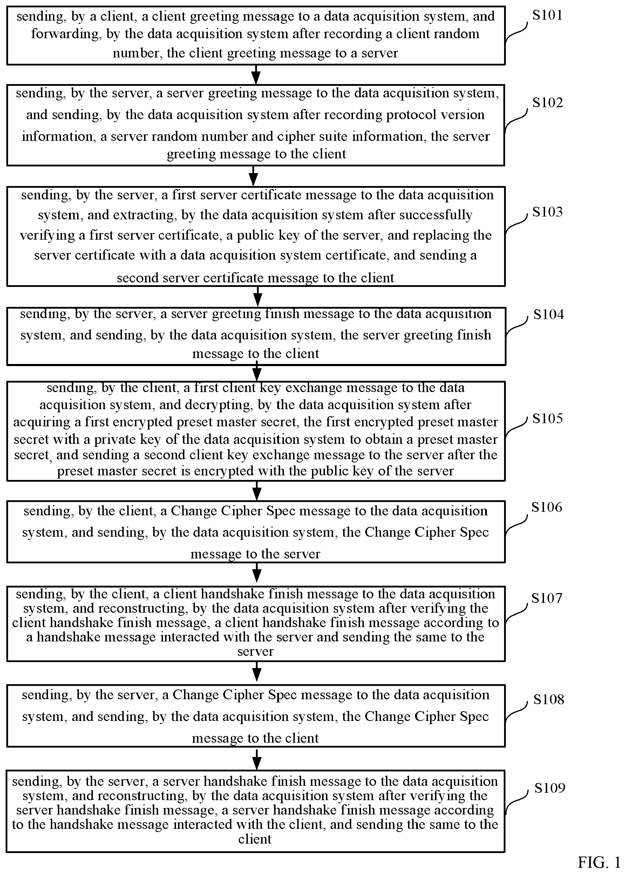

Fig. 1 is a flowchart of a method for acquiring plaintext of network secret data as provided by a first embodiment of the present application. As shown in Fig. 1, the method specifically comprises:
step S101: sending, by a client, a client greeting message to a data acquisition system, and forwarding, by the data acquisition system after recording a client random number, the client greeting message to a server.
   Specifically, the client greeting message (ClientHello) sent by the client to the data acquisition system contains the client random number which is needed for key calculation. After receiving the client greeting message, the data acquisition system needs to record and directly forwards the random number to a server without modifying its content. The data acquisition system needs to save the entire message for verifying a handshake finish message from the client and the server in a handshake finish stage and reconstructing a handshake finish message to be sent to the client and the server.
   It is explained that before step S101, a TCP connection has been established between the client and the server.
Step 102: sending, by the server, a server greeting message to the data acquisition system, and sending, by the data acquisition system after recording protocol version information, a server random number and cipher suite information, the server greeting message to the client.
   Specifically, the server greeting message (ServerHello) sent by the server to the data acquisition system carries protocol version information, a server random number and cipher suite information, wherein the protocol version information may be an SSL or TLS protocol version for use in secure communication between the server and the client, the cipher suite information may be a set of encryption algorithms, and the server random number is used to calculate a key. The data acquisition system needs to record these information. The data acquisition system directly forwards the server greeting message to the client without any modification. The data acquisition system needs to save the entire message for verifying a handshake finish message from the client and the server in a handshake finish stage and reconstructing a handshake finish message to be sent to the client and the server.
Step S103: sending, by the server, a first server certificate message to the data acquisition system, and extracting, by the data acquisition system after successfully verifying a first server certificate, a public key of the server, and replacing the server certificate with a data acquisition system certificate, and sending a second server certificate message to the client.
   Specifically, the server sends the first server certificate message (Certificate) to the data acquisition system, the first server certificate message carrying the server certificate that contains the public key of the server. After receiving the first server certificate message, the data acquisition system needs to verify the server certificate first. After a successful verification, in order to continue to conduct a subsequent handshake process with the server, the data acquisition system needs to extract the public key of the server from the server certificate and save the same. At this point, the data acquisition system saves the entire message for verifying a handshake finish message from the server in a handshake finish stage and reconstructing a handshake finish message to be sent to the server. In order to establish an SSL/TLS connection with the client, the data acquisition system needs to replace the server certificate in the server certificate message with a data acquisition system certificate to obtain a second server certificate message, at which point the data acquisition system saves the entire message for verifying a handshake finish message from the client in a handshake finish stage and reconstructing a handshake finish message to be sent to the client. Afterwards, the data acquisition system sends the second server certificate message to the client, and after receiving the second server certificate message, the client needs to verify the data acquisition system certificate. After a successful verification, a subsequent message may be transmitted.
Step S104: sending, by the server, a server greeting finish message to the data acquisition system, and sending, by the data acquisition system, the server greeting finish message to the client.
   Specifically, the server greeting finish message (ServerHelloDone) sent by the server to the data acquisition system does not contain any information that is needed for acquiring the plaintext of SSL/TLS protocol secret data, and thus the data acquisition system may directly forward this message to the client without any modification. The data acquisition system needs to save the entire message for verifying a handshake finish message from the client and the server in a handshake finish stage and reconstructing a handshake finish message to be sent to the client and the server.
Step S105: sending, by the client, a first client key exchange message to the data acquisition system, and decrypt, by the data acquisition system after acquiring a first encrypted preset master secret, the first encrypted preset master secret with a private key of the data acquisition system to obtain a preset master secret, and sending a second client key exchange message to the server after the preset master secret is encrypted with the public key of the server.
   Specifically, the client generates a preset master secret, encrypts the preset master secret by using a key exchange algorithm and a public key of the data acquisition system, to obtain a first encrypted preset master secret. The key exchange algorithm may be RSA public key encryption algorithm (proposed by Ron Rivest, Adi Shamir and Leonard Adleman, and RSA is made of the initial letters of their surnames). The first key exchange message (ClientKeyExchange) sent by the client to the data acquisition system carries the first encrypted preset master secret. After receiving the first client key exchange message, the data acquisition system needs to decrypt the first encrypted preset master secret with a private key of the data acquisition system to obtain the preset master secret. At this point, the data acquisition system saves the entire message for verifying a handshake finish message from the client in a handshake finish stage and reconstructing a handshake finish message to be sent to the client. Afterwards, to continue the subsequent handshake process with the server, the data acquisition system needs to re-encrypt the preset master secret with the public key of the server to obtain a second encrypted preset master secret, re-encapsulates the second encrypted preset master secret as a second client key exchange message and sends the message to the server. At this point, the data acquisition system saves the entire message for verifying a handshake finish message from the server in a handshake finish stage and reconstructing a handshake finish message to be sent to the server. After obtaining the preset master secret, the data acquisition system successively calculates the master secret and a key for subsequent use in encrypting and decrypting the handshake finish message as well as decrypting SSL/TLS protocol secret data.
Step S106: sending, by the client, a Change Cipher Spec message to the data acquisition system, and sending, by the data acquisition system, the Change Cipher Spec message to the server.
   Specifically, the Change Cipher Spec message (ChangeCipherSpec) sent by the client to the data acquisition system does not contain any information needed for acquiring the SSL/TLS plaintext. Thus, the data acquisition system may directly forward this message to the server without making any modification thereto.
Step S107: sending, by the client, a client handshake finish message to the data acquisition system, and reconstructing, by the data acquisition system after verifying the client handshake finish message, a client handshake finish message according to a handshake message interacted with the server and sending the same to the server.
   Specifically, the data acquisition system needs to decrypt and verify the client handshake finish message (Client Finished) from the client. After a successful verification, the data acquisition system saves the entire message for verifying a handshake finish message from the client in a handshake finish stage and reconstructing a handshake finish message to be sent to the client. The handshake finish message sent from the client is discarded, and the data acquisition system reconstructs a handshake finish message according to all previously saved SSL/TLS handshake messages interacted with the server and sends the same to the server. The reconstructed message is saved for verifying a handshake finish message from the server.
Step S108: sending, by the server, a Change Cipher Spec message to the data acquisition system, and sending, by the data acquisition system, the Change Cipher Spec message to the client.
   Specifically, the Change Cipher Spec message (ChangeCipherSpec) sent by the server to the data acquisition system does not contain any information needed for acquiring the SSL/TLS plaintext. Thus, the data acquisition system may directly forward this message to the server without making any modification thereto.
Step S109: sending, by the server, a server handshake finish message to the data acquisition system, and reconstructing, by the data acquisition system after verifying the server handshake finish message, a server handshake finish message according to the handshake message interacted with the client, and sending the same to the client.

Specifically, the data acquisition system needs to decrypt and verify the handshake finish message (Server Finished) sent from the server. After a successful verification, the data acquisition system discards the server handshake finish message, reconstructs a handshake finish message according to all previously saved SSL/TLS handshake messages interacted with the client, and sends the same to the client.

Through the foregoing steps, the data acquisition system establishes SSL/TLS connections, SSL and SSL', with the client and the server respectively, the two connections having the same session key. During SSL/TLS application data transmission, since the data acquisition system already has all secret information of the SSL/TLS connections, the data acquisition system can decrypt data protected under the SSL/TLS protocol.

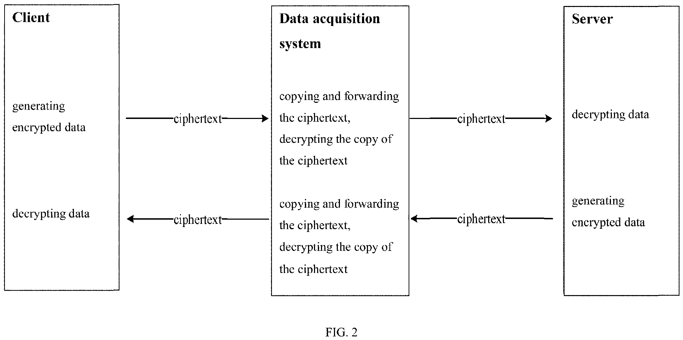

Fig. 2 is a schematic view of processing SSL/TLS data transmission as provided by a first embodiment of the present application. To ensure fast data processing, the data acquisition system, after receiving data, copies the data and then forwards the same immediately, without any modification of the data packet payload. Afterwards, where the load is allowed, the data acquisition system decrypts SSL/TLS ciphertext data to obtain the plaintext of secret data.

With the method for acquiring plaintext of network secret data provided by the present application, on the basis that a TCP connection exists between a client and a server, a data acquisition system is introduced, which establishes two correlated SSL/TLS connections with the client and the server, respectively, by modifying an SSL/TLS handshake message, and the two connections share session keys. The data acquisition system having these keys can restore the plaintext of secret data. Moreover the ciphertext after being copied can be forwarded immediately, shortening a response time and improving an SSL throughput. In addition, only a copy of key information needs to be maintained for each user request, saving memory resources and increasing the maximum number of user connections.

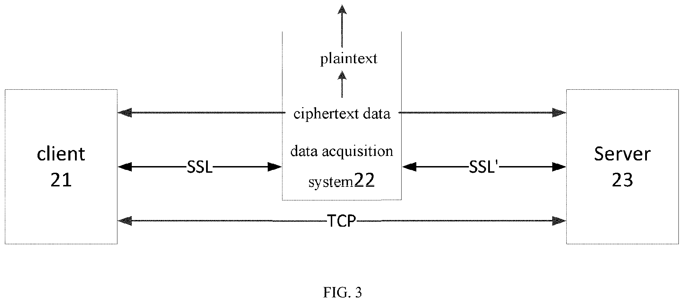

In correspondence to the foregoing method for acquiring plaintext of network secret data, a second embodiment of the present application further provides a system for acquiring plaintext of network secret data. Fig. 3 is a schematic view of a system provided by the second embodiment of the present application, the system comprises: a client 21, a data acquisition system 22 and a server 23, wherein the client 21 establishes a TCP connection with the server 23, the data acquisition system 22 establishes SSL/TLS connections with the client 21 and the server 23, respectively, and the two connections have same session keys.

The system provided by the second embodiment of the present application is embedded with the method provided by the first embodiment of the present invention, and thus the specific operating process of the system provided by the present application is not detailed here.

With the system for acquiring plaintext of network secret data provided by the present application, on the basis that a TCP connection exists between a client and a server, a data acquisition system is introduced. The data acquisition system establishes two correlated SSL/TLS connections with the client and the server, respectively, by modifying an SSL/TLS handshake message, and the two connections share session keys. The data acquisition system having these keys can restore the plaintext of secret data. Moreover the ciphertext after being copied can be forwarded immediately, shortening a response time and improving an SSL throughput. In addition, only a copy of key information needs to be maintained for each user request, saving memory resources and increasing the maximum number of user connections.

Those skilled in the art may further appreciate that objects and algorithm steps of various examples as described with reference to the embodiments disclosed herein can be implemented as electronic hardware, computer software or a combination of both. To clearly illustrate the interchangeability of hardware and software, compositions and steps of various examples have been generally described in the above illustration according to functions. Whether these functions are executed in the hardware form or software form, which depends on specific applications and design constraint conditions of the technical solutions. Those skilled in the art may use different methods for each specific application to implement functions described, although such implementations should not be construed as being beyond the scope of the present application.

Steps of the methods or algorithms as described in conjunction with the embodiments disclosed herein may be implemented with hardware, software modules executed by a processor, or a combination of both. The software modules may be embedded in a random access memory (RAM), a memory, a read-only memory (ROM), an electrically programmable ROM, an electrically erasable programmable ROM, a register, a hard disk, a removable disk, a CD-ROM, or any other type of storage media that are well known in the art.

Finally, it should be explained that the aforementioned embodiments are merely used for illustrating, rather than limiting the technical solutions of the present invention. Although the present invention has been described in detail with reference to the embodiments, those skilled in the art will understand that modifications or equivalent substitutions can be made to the technical solutions of the present invention without departing from the scope and spirit of the technical solutions of the present invention, and thereby should all be encompassed within the scope of the claims of the present invention.

## Claims

1. A method for acquiring plaintext of network secret data, the method comprising:
sending, by a server, a first server certificate message to a data acquisition system, the first server certificate message carrying a server certificate, the server certificate including a public key of the server;
verifying, by the data acquisition system, the server certificate;
extracting, by the data acquisition system, the public key of the server according to the server certificate and saving the public key of the server, upon a successful verification;
replacing, by the data acquisition system, the server certificate with the data acquisition system certificate, the data acquisition system certificate including a public key of the data acquisition system;
sending, by the data acquisition system, a second server certificate message to the client, the second server certificate message carrying the data acquisition system certificate;
verifying, by the client, the data acquisition system certificate;
encrypting, by the client, a preset master secret with the public key of the data acquisition system to obtain a first encrypted preset master secret;
sending, by the client, a first client key exchange message to the data acquisition system, the first client key exchange message carrying the first encrypted preset master secret;
decrypting, by the data acquisition system, the first encrypted preset master secret with a private key of the data acquisition system to obtain the preset master secret; and
generating, by the data acquisition system, a key according to the preset master secret, such that the data acquisition system decrypts secret data transmitted in a network according to the key.

2. The method according to claim 1, **characterized in that**, prior to the sending, by a server, a first server certificate message to a data acquisition system, the method further comprises:
establishing a Transmission Control Protocol connection between the server and the client;
sending, by the client, a client greeting message to the data acquisition system, the client greeting message carrying a client random number;
recording, by the data acquisition system, the client random number and sending the client greeting message to the server;
sending, by the server, a server greeting message to the data acquisition system, the server greeting message carrying protocol version information, a server random number and cipher suite information; and
recording, by the data acquisition system, the protocol version information, the server random number and the cipher suite information and sending the server greeting message to the client.

3. The method according to claim 2, **characterized in that** after the decrypting, by the data acquisition system, the first encrypted preset master secret with a private key of the data acquisition system to obtain the preset master secret, the method further comprises:
encrypting, by the data acquisition system, the preset master secret with the public key of the server to obtain a second encrypted preset master secret; and
sending, by the data acquisition system, a second client key exchange message to the server, the second client key exchange message carrying the second encrypted preset master secret.

4. The method according to claim 3, **characterized in that** prior to the encrypting, by the client, a preset master secret with the public key of the data acquisition system to obtain a first encrypted preset master secret, the method further comprises:
generating, by the client, the preset master secret.

5. A system for acquiring plaintext of network secret data, the system comprises the server, the data acquisition system and the client according to claim 1.
